# DEMANDE DE BREVET EUROPEEN

(11) **EP 4 738 213 A1**
(43) Date de publication de la demande: **06.05.2026**
(21) Numéro de dépôt: 24306830.1
(22) Date de dépôt: 30.10.2024
(51) Int. Cl.: G06Q 10/06, G06Q 10/20, G07C 5/00, G08G 1/00

(54) **PROCÉDÉ DE DÉPANNAGE D'UN VÉHICULE D'UN USAGER ET SYSTÈME DE GESTION DE DÉPANNAGE D'UN VÉHICULE D'UN USAGER**

(71) Demandeur: Prugnieres, Patrick, 97430 Le Tampon (FR)
(72) Inventeur: PRUGNIERES, Patrick, 97430 Le Tampon (FR); DE BOLLIVIER, Sébastien, 97429 Petite-Ile (FR); DELAPLACE, Jean-Roger, 97421 la Rivière Saint louis (FR); CADJEE, Naïma Khadîdja, 97430 Le Tampon (FR); PRUGNIERES, Karen Marie Alma, 31140 Launaguet (FR)
(74) Mandataire: Tranvouez, Edern Morgan

(57) **Abrégé**

L'invention concerne Procédé de dépannage d'un véhicule (100) d'un usager, l'usager possédant un dispositif de communication (31), le procédé comprenant les étapes suivantes : A. demande de dépannage par l'usager au moyen de son dispositif de communication, la demande de dépannage identifiant le type du véhicule et éventuellement un type de panne suspectée ; B. localisation de l'usager notamment au moyen du dispositif de communication, ladite localisation fournissant une position estimée du véhicule de l'usager ; D. identification d'un dépanneur (111, 112, 113, 115) susceptible d'intervenir pour dépanner le véhicule de l'usager ; E.Envoi d'une demande d'intervention au dépanneur identifié (112).

## Description

### Domaine technique

L'invention concerne le domaine du dépannage de véhicule et la gestion des opérations de dépannage.

### État de l'art antérieur

Actuellement, en cas de panne d'un véhicule, sauf à avoir un abonnement dédié à un service de dépannage du constructeur du véhicule ou à être dans un domaine réservé comme sur les autoroutes françaises, l'usager du véhicule doit chercher lui-même le dépanneur le plus proche du lieu de la panne et contacter ce dépanneur dans l'espoir que ce dernier puisse le dépanner.

Ce type de recherche est généralement fastidieux et se fait sans garantie que ce dépanneur soit à même de dépanner le véhicule. En effet, outre le fait que les véhicules modernes nécessitent des équipements dédiés qui ne sont pas forcément accessibles aux dépanneurs en dehors du réseau du constructeur du véhicule, le dépanneur peut ne pas être disponible ou avoir sa ligne téléphonique en dérangement. Ainsi, en plus du stress lié à la panne, l'usager se retrouve en face de la difficulté à trouver un dépanneur compétent pour la panne rencontrée et qui soit disponible pour le dépanner.

Dans le cas où l'usager possède un abonnement à un service de dépannage du constructeur, l'usager peut simplement contacter le service de dépannage de son constructeur auquel il est abonné et demander à ce dernier de lui trouver un dépanneur adapté. Cette solution est donc plus simple pour l'usager et lui assure de trouver facilement le dépanneur adapté, puisqu'appartenant au réseau du constructeur. Néanmoins, ce report de la charge d'identifier le dépanneur à un employé du constructeur est relativement coûteux et peut prendre du temps, puisque le service de dépannage du constructeur doit prendre le temps de contacter le dépanneur et vérifier sa disponibilité.

Ainsi, les solutions actuelles sont peu adaptées et peuvent être couteuses pour l'usager.

### Exposé de l'invention

L'invention vise à remédier à cet inconvénient et a ainsi pour but de fournir une solution plus adaptée vis-à-vis des solutions actuelles et qui permettent de facilité la mise en relation de l'usager avec un dépanneur qui soit apte à le dépanner.

L'invention concerne à cet effet un procédé de dépannage d'un véhicule d'un usager, l'usager possédant un dispositif de communication, le procédé comprenant les étapes suivantes :
A. demande de dépannage par l'usager au moyen de son dispositif de communication, la demande de dépannage identifiant le type du véhicule et un type de panne suspectée,
B. localisation de l'usager notamment au moyen du dispositif de communication, ladite localisation fournissant une position estimée du véhicule de l'usager,
D. identification d'un dépanneur susceptible d'intervenir pour dépanner le véhicule de l'usager, l'identification étant basée sur au moins l'un des critères suivants :
   - le type de véhicule,
   - le type de panne suspectée,
   - la position estimée du véhicule,
   - éventuelle autorisation d'intervention à l'emplacement du véhicule,
   - la disponibilité du dépanneur et des équipements nécessaires pour intervenir sur le véhicule,
E. envoi d'une demande d'intervention au dépanneur identifié.

Un tel procédé de dépannage permet à un usager de trouver facilement et rapidement le dépanneur qui est susceptible de le dépanner ceci sans avoir à vérifier que ce dernier sera à même de le dépanner et ceci sans avoir à souscrire un quelconque abonnement d'un service de dépannage du constructeur de son véhicule. De plus une telle mise en relation de l'usager et le dépanneur se faisant par l'intermédiaire du dispositif de communication de l'usager, elle peut être entièrement automatisée, réduisant de ce fait le temps entre la survenue de la panne et l'intervention du dépanneur.

Dans le cadre de la présente invention, le véhicule peut être de tout type et ne se limite pas au seul véhicule automobile à motorisation thermique classique que sont les voitures. Ainsi conformément à l'invention, le véhicule peut être sélectionné dans la liste comprenant : les véhicules automobiles à motorisation thermique classique, tel que les véhicules roulant à l'essence, au gasoil ou au gaz de pétrole liquéfié, les véhicules automobiles à motorisation hybride, les véhicules automobiles à motorisation électrique, les véhicules automobiles utilisant un carburant alternatif, tel que l'hydrogène, les véhicules de transport de marchandise (ou camion) à motorisation thermique classique, les véhicules de transport de marchandise (ou camion) à motorisation électrique, les véhicules de transport de marchandise (ou camion) à motorisation hybride, les véhicules de transport de marchandise (ou camion) à motorisation alternative, les véhicules à deux roues (moto, motocyclette ou scooter) ou à trois roues (scooter à trois roues) à motorisation thermique classique, les véhicules à deux roues (motocyclette ou scooter) ou à trois roues (scooter à trois roues) à motorisation électrique, les véhicules à deux roues (motocyclette ou scooter) à motorisation alternative, les vélos électriques et les trottinettes électriques.

Le procédé peut comprendre en outre les étapes suivantes :
C. transmission de l'information relative à la présence d'un véhicule en panne et de l'emplacement du véhicule, à une autorité et/un organisme d'information routière,
H. de manière optionnelle, après résolution de la panne ou retrait du véhicule, transmission de l'information de la résolution de la panne du véhicule.

Avec de telles étapes, les autorités et/ou les autres usagers de la route peuvent être prévenu de la survenue de la panne et ainsi être vigilant lors du passage à proximité du véhicule arrêté sur la voie publique.

Préalablement à l'étape D. d'identification du dépanneur susceptible d'intervenir, le procédé peut comprendre de dépannage d'un véhicule les étapes préalables suivantes :
PA. Pour chaque dépanneur apte à fournir un dépannage d'un véhicule, fourniture des informations suivantes : localisation du dépanneur, types de véhicules susceptibles d'être dépannés par le dépanneur et éventuellement les équipements à disposition, des informations relatives à un dispositif de communication d'un intervenant du dépanneur,
PB. De manière optionnelle, transmission d'une information relative à un changement de disponibilité du dépanneur et/ou de l'un de ces équipements, cette information étant préférentiellement utilisée lors de l'étape D. d'identification du dépanneur.

Ces informations autorisent une sélection optimisée du dépanneur susceptible de dépanner le véhicule de l'usager.

L'étape D. d'identification du dépanneur peut comprendre les sous-étapes suivantes :
D3.sélection sur un territoire donné autour de la position estimée du véhicule de dépanneurs susceptibles d'intervenir pour le dépannage du véhicule, ces dépanneurs susceptibles d'intervenir pour le dépannage du véhicule étant localités sur le territoire donné et étant préférentiellement sélectionnés comme apte à intervenir sur le type de véhicule et sur le type de panne suspecté, comme comportant l'équipement adapté et, lorsqu'il est mis en oeuvre une étape préalable PB. de transmission de l'information relative à un changement de disponibilité, étant confirmé comme disponible,
D4.détermination pour chacun des dépanneurs sélectionnés d'un temps de déplacement estimé pour intervenir à la position estimée,
D5. identification du dépanneur susceptible d'intervenir pour dépanner le véhicule de l'usager parmi les dépanneurs sélectionnés sur la base des temps de déplacement estimés à la sous étape D4I.

Avec de telles étapes, il est possible de sélectionner le dépanneur qui pourra être le plus rapidement sur les lieux de la panne. De cette manière, l'attente de l'usager peut être réduite au minimum.

L'étape D. d'identification du dépanneur peut comprendre la sous étape suivante :
D1. Vérification si la position estimée du véhicule est associée à une zone dans laquelle une autorisation d'intervention est nécessaire,
D2. Dans le cas où une telle autorisation d'intervention est nécessaire pour la position estimée, identification du ou des dépanneurs présentant une telle autorisation comme étant susceptibles d'intervenir pour le dépannage du véhicule,

De telles étapes permettent de prendre en compte le fait que certaines zones, telles que les autoroutes françaises, peuvent être associées à des exclusivités territoriales. Ainsi, l'usager est sûr d'être mis en relation avec un dépanneur bénéficiant des autorisations pour le dépanner à la position de son véhicule en panne.

Préalablement à la demande de dépannage, le procédé peut comprendre l'étape suivante :
PC. Fourniture par l'usager des informations relatives à son véhicule, ces informations relatives au véhicule incluant au moins l'un parmi une immatriculation du véhicule, un type véhicule, un constructeur du véhicule, une date de mise en circulation du véhicule et des opérations de maintenance réalisées sur le véhicule ;
Et dans lequel l'étape A. de demande de dépannage par l'usager comprend les sous-étapes suivantes :
   A1. Fourniture par l'usager des informations relatives à la panne affectant son véhicule,
   A2. Fourniture des informations relatives au véhicule et des informations relatives à la panne en entrée d'un réseau de neurones préalablement entraîné pour fournir en sortie la ou les pannes susceptibles d'être présentées par un véhicule, la ou les pannes obtenues en sortie dudit réseau de neurones constituant le type de panne suspectée.

De telles étapes permettent de déterminer précisément la panne dont est susceptible d'être affecté le véhicule de l'usager et ouvre ainsi la possibilité de prendre en compte cette information pour le choix du dépanneur. De même, le dépanneur pouvant être informé de la panne susceptible d'être présentée par le véhicule et il est plus à même de sélectionner l'équipement dont son intervenant doit se munir.

Le procédé peut comprendre en outre l'étape suivante :
F. Après réception d'une acceptation d'intervention par le dépanneur identifié, envoi d'une confirmation d'intervention à l'usager par l'intermédiaire de son dispositif de communication, la confirmation intégrant préférentiellement une indication relative au temps d'attente avant l'arrivée d'un intervenant du dépanneur identifié.

De cette manière, l'usager est à même d'être rassuré sur la prise en charge de sa panne et être informé sur un temps d'attente estimé.

Le procédé de dépannage d'un véhicule peut comprendre en outre, après l'étape F. d'envoi d'une confirmation d'intervention à l'usager, l'étape suivante :
G. Récupération d'une information de positionnement d'un intervenant du dépanneur identifié venant effectuer l'intervention de dépannage, par exemple au moyen d'un dispositif de communication de l'intervenant, et transmission de cette information à l'usager par l'intermédiaire de son dispositif de communication.

De cette manière, l'usager est à même de suivre l'intervenant du dépanneur pendant le déplacement de ce dernier pour le dépanner et ainsi être à même d'être rassuré en cas de retard de ce dernier.

L'invention concerne en outre un système de gestion de dépannage d'un véhicule d'un usager, comprenant un appareil informatique, tel qu'un ou plusieurs serveurs informatiques, conformé pour communiquer avec un dispositif de communication d'un usager possédant un véhicule en panne, l'appareil informatique étant configuré pour :
- Recevoir une demande de dépannage par l'usager au moyen de son dispositif de communication, la demande de dépannage identifiant le type du véhicule et un type de panne suspectée,
- Localiser l'usager notamment au moyen du dispositif de communication, ladite localisation fournissant une position estimée du véhicule de l'usager,
- Identifier un dépanneur susceptible d'intervenir pour dépanner le véhicule de l'usager, l'identification étant basée sur au moins l'un des critères suivants :
   - le type de véhicule,
   - le type de panne suspectée,
   - la position estimée du véhicule,
   - éventuelle autorisation d'intervention à l'emplacement du véhicule,
   - la disponibilité du dépanneur et des équipements nécessaires pour intervenir sur le véhicule,
- Envoyer une demande d'intervention au dépanneur identifié.

Un tel système permet de mettre en oeuvre un procédé selon l'invention et de bénéficier des avantages associés.

L'appareil informatique peut être configuré pour, préalablement à la réception d'une demande de dépannage par l'usage, récupérer des informations relatives à son véhicule, ces informations relatives au véhicule incluant au moins l'un parmi une immatriculation du véhicule, un type de véhicule, un constructeur du véhicule, une date de mise en circulation du véhicule et des opérations de maintenance réalisées sur le véhicule,
l'appareil informatique étant en outre configuré pour, lors de la réception d'une demande de dépannage par l'usager au moyen de son dispositif de communication, l'usager ayant également fourni des informations relatives à la panne affectant son véhicule, soumet en entrée d'un réseau de neurones les informations relatives au véhicule et les informations relatives à la panne, le réseau de neurones ayant été préalablement entraîné pour fournir en sortie la ou les pannes susceptibles d'être présentées par un véhicule, la ou les pannes obtenues en sortie dudit réseau de neurones constituant le type de panne suspectée.

De cette manière, l'appareil informatique est à même de permettre une identification précise de la panne suspectée et donc le dépanneur le plus susceptible de pouvoir dépanner le véhicule.

L'au moins un appareil informatique peut en outre être configuré pour :
- communiquer avec le dispositif de communication de l'usager au moyen d'une première interface logicielle, notamment choisie parmi une application mobile, une application internet et une page internet, ladite première interface logicielle étant dédiée à l'usager,
- communiquer avec un dispositif de communication de chaque dépanneur, ou de son intervenant, afin notamment d'envoyer la demande d'intervention au dépanneur identifié, ladite communication avec le dispositif de communication de chaque dépanneur, ou de son intervenant, étant réalisée au moyen d'une deuxième interface logicielle, notamment choisie parmi une application mobile, une application internet et une page internet, ladite deuxième interface logicielle étant dédiée aux dépanneurs, et
- de manière avantageuse, communiquer avec un dispositif de communication d'administration du système de gestion de dépannage d'un véhicule, ladite communication avec le dispositif de communication d'administration étant réalisée au moyen d'une troisième interface logicielle, notamment choisie parmi une application mobile, une application internet et une page internet, ladite troisième interface logicielle étant dédiée à l'administration du système de gestion de dépannage d'un véhicule.

De cette manière, l'au moins un appareil informatique peut aisément communiquer avec l'usager et les dépanneurs afin de fournir une gestion optimisée du dépannage du véhicule.

L'au moins un appareil informatique peut être configuré pour communiquer avec le dispositif de communication d'administration du système de gestion de dépannage d'un véhicule, ladite communication avec le dispositif de communication d'administration étant réalisée au moyen de la troisième interface logicielle,
la troisième interface permettant, à partir ladite communication avec le dispositif de communication d'administration, d'administrer au moins l'un parmi :
- des règles utilisées pour identifier du dépanneur susceptible d'intervenir pour dépanner le véhicule de l'usager,
- d'éventuelles zones dans lesquelles une autorisation d'intervention est nécessaire,
- des interventions sur véhicules en cours,
- l'émission de rapports d'activité concernant les demandes d'invention et d'interventions ayant eu lieu.

Avec une telle configuration, il est aisé de superviser le système de gestion de dépannage d'un véhicule à partir du dispositif de communication d'administration. La gestion des différents dépannages en est donc facilitée.

### Brève description des dessins

La présente invention sera mieux comprise à la lecture de la description d'exemples de réalisation, donnés à titre purement indicatif et nullement limitatif, en faisant référence aux dessins annexés sur lesquels :
- La figure 1 illustre un ordinogramme d'un procédé de dépannage d'un véhicule selon l'invention,
- La figure 2 illustre un ordinogramme d'une étape A. de demande de dépannage par l'usager,
- La figure 3 illustre un ordinogramme d'une étape D. d'identification d'un dépanneur susceptible d'intervenir pour dépanner le véhicule de l'usager
- La figure 4 illustre un système de gestion de dépannage d'un véhicule permettant la mise en oeuvre d'un procédé selon l'invention,
- La figure 5 illustre un exemple d'affichage d'un dispositif de communication d'un usager faisant une demande de dépannage dans le cadre du procédé selon l'invention.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### Exposé détaillé de modes de réalisation particuliers

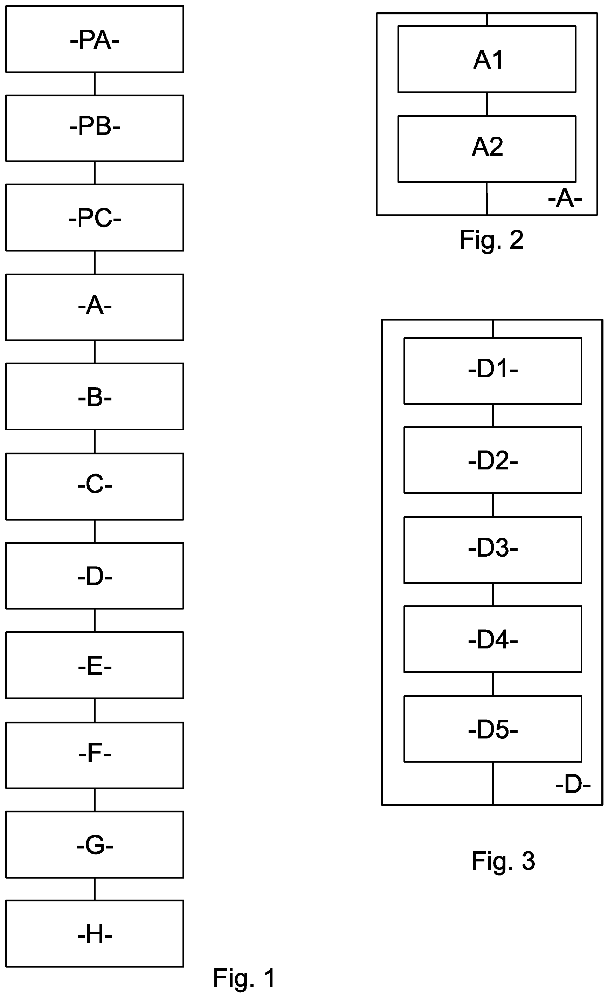

Les figures 1 à 3 illustrent par des ordinogrammes respectifs les principales étapes et sous-étapes d'un procédé de dépannage de véhicule selon l'invention qui permet à un usager subissant une panne de pouvoir sereinement être dépanné par un dépanneur se trouvant à proximité.

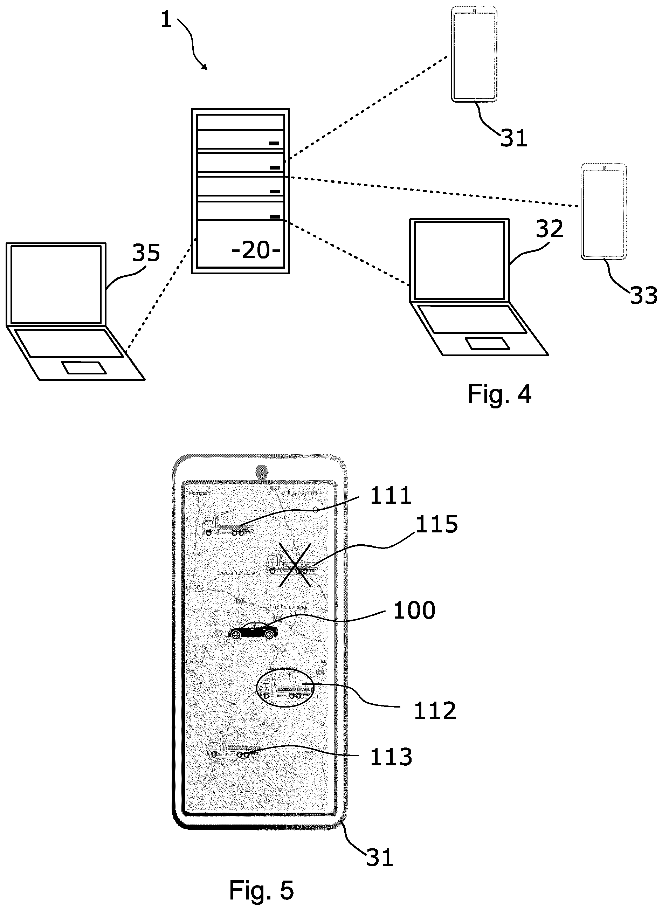

Dans le cadre de la mise en oeuvre d'un tel procédé, comme montré sur la figure 4, l'usager présentant son véhicule 100 possède un dispositif de communication 31 ; tel qu'un mobile multifonction (ou, selon la dénomination anglaise « smartphone »).

Comme montré sur la figure 1, le procédé de dépannage selon l'invention comprend les étapes suivantes :
PA. Pour chaque dépanneur 111, 112, 113, 115 apte à fournir un dépannage d'un véhicule, fourniture des informations suivantes : localisation du dépanneur, types de véhicules susceptibles d'être dépannés par le dépanneur et éventuellement les équipements à disposition, des informations relatives à un dispositif de communication 32,33 d'un intervenant du dépanneur,
PB. De manière optionnelle, transmission d'une information relative à un changement de disponibilité du dépanneur 111, 112, 113, 115 et/ou de l'un de ces équipements, cette information étant préférentiellement utilisée lors de l'étape D. d'identification du dépanneur,
PC. Fourniture par l'usager des informations relatives à son véhicule, ces informations relatives au véhicule incluant au moins l'un parmi une immatriculation du véhicule, un type de véhicule, un constructeur du véhicule, une date de mise en circulation du véhicule et des opérations de maintenance réalisées sur le véhicule ;
A. Demande de dépannage par l'usager au moyen de son dispositif de communication, la demande de dépannage identifiant le type du véhicule et éventuellement un type de panne suspectée,
B. Localisation de l'usager notamment au moyen du dispositif de communication, ladite localisation fournissant une position estimée du véhicule 100 de l'usager,
C. Transmission de l'information relative à la présence d'un véhicule en panne et de l'emplacement du véhicule, à une autorité et/un organisme d'information routière,
D. identification d'un dépanneur 111, 112, 113, 115 susceptible d'intervenir pour dépanner le véhicule de l'usager, l'identification étant basée sur au moins l'un des critères suivants :
   - le type de véhicule,
   - le cas échéant, le type de panne suspectée,
   - la position estimée du véhicule,
   - éventuelle autorisation d'intervention à la position estimée du véhicule,
   - la disponibilité du dépanneur 111, 112, 113, 115 et des équipements nécessaires pour intervenir sur le véhicule,
E. envoi d'une demande d'intervention au dépanneur identifié 112,
G. Après réception d'une acceptation d'intervention par le dépanneur identifié 112, envoi d'une confirmation d'intervention à l'usager par l'intermédiaire de son dispositif de communication, la confirmation intégrant préférentiellement une indication relative au temps d'attente avant l'arrivée d'un intervenant du dépanneur identifié 112,
H. Récupération d'une information de positionnement d'un intervenant du dépanneur identifié 112 venant effectuer l'intervention de dépannage, par exemple au moyen d'un dispositif de communication 32, 33 de l'intervenant, et transmission de cette information à l'usager par l'intermédiaire de son dispositif de communication 31.

Ainsi, conformément à l'invention et comme précisé par les étapes P1 à PC, de manière avantageuse et préalablement à l'étape A. de demande de dépannage par l'usager, au moins l'un de l'usager et des dépanneurs 111, 112, 113, 115 aptes à fournir un dépannage peut fournir les informations le concernant afin de faciliter la mise en relation au moyen du présent procédé de dépannage.

En ce qui concerne les dépanneurs 111, 112, 113, 115, chacun peut fournir, dans le cadre de l'étape PA. les informations suivantes : localisation du dépanneur, types de véhicules susceptibles d'être dépannés par le dépanneur et éventuellement les équipements à disposition, des informations relatives à un dispositif de communication 32,33 d'un intervenant du dépanneur. Ces informations permettent d'identifier, outre la localisation du dépanneur qui peut permettre d'estimer le temps d'intervention d'un intervenant du dépanneur afin d'arriver sur la position estimée du véhicule 100 de l'usager, si le dépanneur est apte à dépanner ou non l'usager. En effet, outre le fait que certaines connaissances sont requises en fonction du type du véhicule, certains véhicules peuvent, pour des raisons de ses spécificités ou de besoin d'outillages adaptés, requérir une spécialisation du dépanneur.

De même, afin de ne prendre en compte uniquement les dépanneurs disponibles pour venir dépanner l'usager, dans le cadre de l'étape PB. le dépanneur peut transmettre d'une information relative à un changement de disponibilité du dépanneur 111, 112, 113, 115 et/ou de l'un de ces équipements. Cette transmission peut se faire soit manuellement, le dépanneur informant, au moyen d'un site internet ou d'une application mobile dédiée, lors d'un changement de statut le concernant, concernant son intervenant ou son équipement. En alternative, ou en complément, ce transfert peut également se faire de manière au moins en partie automatisé, le dépanneur ou son intervenant étant indiqué comme non disponible lorsqu'il accepte une intervention.

Concernant l'usager, il peut fournir les informations relatives à son véhicule, à l'entretien de ce dernier et les éventuelles pannes déjà encourues. Les informations relatives aux véhicules peuvent inclure au moins l'un parmi :
- Un numéro d'immatriculation,
- Un type du véhicule,
- Le constructeur du véhicule,
- Le modèle du véhicule, et
- L'année de fabrication et/ou d'immatriculation.

Conformément à la présente invention, le numéro d'immatriculation est à préférer, celui permet dans de nombreux pays, par accès à la base de données des immatriculations, d'obtenir l'ensemble des informations relatives aux véhicules évitant de ce fait à l'usager de les rentrer. Les informations relatives au véhicule peuvent permettre, dans le cadre de la présente invention, de vérifier que chaque dépanneur susceptible de dépanner l'usager est à même de dépanner le véhicule 100.

Concernant les informations relatives à l'entretien du véhicule et les éventuelles pannes déjà encourues, il peut être prévu dans le cadre de l'invention de fournir, par l'intermédiaire du dispositif de communication de l'usager, un cahier d'entretien du véhicule. De cette manière, l'usager est à même de rentrer les informations relatives à l'entretien de son véhicule à chaque passage chez le garagiste lors de la réalisation des opérations d'entretiens. De telles informations relatives à l'entretien du véhicule et les éventuelles pannes déjà encourues peuvent être utilisées dans le cadre de l'identification de la panne du véhicule.

Ces informations ayant été préalablement renseignées, lorsque l'usage rencontre une panne de son véhicule, il peut, conformément à l'étape A. faire une demande de dépannage au moyen de son dispositif de communication. Lors de cette demande, l'usager identifie le type de son véhicule, ceci notamment par l'intermédiaire des informations déjà fournies, et éventuellement un type de panne suspectée.

La transmission du type de panne suspectée par l'usager peut se faire par différente façon :
- l'usager peut répondre à un questionnaire, qui est spécifique ou non à son véhicule, au moyen de son dispositif de communication afin de permettre l'identification de panne subie,
- l'usager peut indiquer, sous forme d'un texte les dysfonctionnements rencontrés et les messages du tableau de bord, et/ou
- l'usager peut sélectionner dans un menu déroulant une indication du type de panne qu'il estime subir.

Dans le cadre de cette étape A. de demande de dépannage de l'usager, afin d'identifier la panne rencontrée, les informations fournies par l'usager peuvent être soumise à un réseau de neurones. Pour se faire, l'étape A. de demande de dépannage, l'usager peut comprendre, comme montré sur la figure 2, les étapes suivantes :
A1. fourniture par l'usager des informations relatives à la panne affectant son véhicule,
A2. fourniture des informations relatives au véhicule et des informations relatives à la panne en entrée d'un réseau de neurones préalablement entraîné pour fournir en sortie la ou les pannes susceptibles d'être présentées par un véhicule, la ou les pannes obtenues en sortie dudit réseau de neurones constituant le type de panne suspectée.

Selon cette possibilité, le réseau de neurones a préalablement été entraîné à partir de données relatives aux pannes rencontrées pour chaque type de véhicule, modèle de véhicule et constructeurs de véhicule, ces données incluant, outre les pannes, les informations relatives aux symptômes rencontrés, aux messages d'ordinateur de bord fourni à l'usager et les fréquences auxquelles ces pannes sont rencontrées.

Plus spécifiquement selon une possibilité de l'invention, le réseau de neurones peut présenter une architecture hybride en comprenant :
- un premier sous réseau de neurones, du type réseau de neurones convolutif, dédié aux données de véhicules et notamment aux codes de pannes tels que les codes de diagnostic embarqué (plus connu sous le sigle anglais OBD), et
- un deuxième sous-réseau de neurones, du type réseau récurrent à mémoire court et long terme, dédié à une analyse de séquences temporelles permettant notamment de prendre en compte les données de maintenance des véhicules,
- une couche de fusion afin de concaténer les sorties du premier et du deuxième sous réseau de neurones.

L'entraînement d'un tel réseau de neurones peut être réalisé à partir de données d'entraînement issue :
- de bases de données de réparation et d'entretien de véhicule telles que la base de données commercialisées sous la dénomination haynespro^{™},
- de données de codes de diagnostic embarqué (plus connu sous le sigle anglais OBD),
- d'historique d'interventions réelles (cela notamment dans le cadre d'une amélioration du procédé selon l'invention).

Les données d'entrainement, afin d'optimiser la procédure d'apprentissage, peuvent être prétraitées en effectuant les étapes suivantes : une normalisation des données de codes de diagnostic embarqué associées, une vectorisation des descriptions textuelles, un encodage 1 parmi n (ou selon la dénomination anglaise « one-hot ») des données catégorielles, un séquençage temporelle des historiques, et une correction des données manquante par exemple des valeurs médianes ou sur la base de modes statistiques.

L'entraînement du réseau de neurones peur être réalisé en trois phases :
(i) une phase de pré-entraînement, basée principalement sur les données issues des bases de données de réparation et d'entretien de véhicule,
(ii) une phase d'affinage de l'apprentissage, lors de laquelle le réseau de neurones peut être adapté pour différents types de véhicule ceci en intégrant pour ces véhicules les données constructeur spécifiques, dont notamment les données de codes de diagnostic embarqué spécifiques audit constructeur, l'apprentissage réalisée pouvant avantageusement être validé au moyen de cas réels,
(iii) une phase d'apprentissage continu, notamment mise en oeuvre en parallèle du présent procédé de dépannage de véhicule, lors de laquelle les données usagers, les retours d'intervention et des données de mise à niveau peuvent être utilisés pour adapter le réseau de neurones.

En plus de cette demande de dépannage, il est également transmis dans le cadre de l'étape B. une localisation de l'usager et donc du véhicule. Cette information sur la localisation de l'usager, par l'intermédiaire par exemple des fonctions de géolocalisation du dispositif, permet ainsi de savoir où se trouve le véhicule à dépanner. On notera que dans le cadre du présent procédé, il peut être prévu une possibilité de correction de la position afin de permettre à l'usager de corriger la position estimée du véhicule dans le cas où la position estimée serait partiellement erronée.

Afin de limiter les risques d'accident avec un véhicule secondaire circulant sur la même route, dans le cadre de l'étape C. il peut être prévu, une fois la demande de dépannage transmis par l'usager et la fourniture de la localisation de l'usager, une transmission de l'information relative à la présence d'un véhicule en panne et de l'emplacement du véhicule à :
- une autorité, telle la police ou la gendarmerie ou les gestionnaires de la route où a eu lieu la panne, et/ou,
- un organisme d'information routière, tel qu'une radio d'information routière ou une société fournissant un système d'aide à la conduite, tel qu'une application de guidage par géolocalisation.

Cette autorité et/ou cet organisme peut ainsi faire le nécessaire, par exemple au moyen d'un affichage adapté, d'une annonce radio ou d'un popup sur une application de guidage, pour prévenir les autres conducteurs transitant sur ou vers la route où a eu lieu la panne.

L'étape D. permet, suite à la transmission de la demande de dépannage de l'usager, d'identifier le dépanneur 111, 112, 113, 115 susceptible d'intervenir pour dépanner le véhicule de l'usager. Pour se faire, l'étape D. peut comporter, comme illustré sur la figure 3, les étapes suivantes :
D1. vérification si la position estimée du véhicule est associée à une zone dans laquelle une autorisation d'intervention est nécessaire,
D2. dans le cas où une telle autorisation d'intervention est nécessaire pour la position estimée, identification du ou des dépanneurs présentant une telle autorisation comme étant susceptibles d'intervenir pour le dépannage du véhicule,
D3. sélection sur un territoire donné autour de la position estimée du véhicule de dépanneurs susceptibles d'intervenir pour le dépannage du véhicule, ces dépanneurs susceptibles d'intervenir pour le dépannage du véhicule étant localités sur le territoire donné et étant préférentiellement sélectionnés comme apte à intervenir sur le type de véhicule et sur le type de panne suspecté, comme comportant l'équipement adapté et, lorsqu'il est mis en oeuvre une étape préalable PB. de transmission de l'information relative à un changement de disponibilité, étant confirmé comme disponible,
D4. détermination pour chacun des dépanneurs sélectionnés d'un temps de déplacement estimé pour intervenir à la position estimée,
D5. identification du dépanneur susceptible d'intervenir pour dépanner le véhicule de l'usager parmi les dépanneurs sélectionnés sur la base des temps de déplacement estimé s à la sous étape D4..

Bien entendu, les étapes D1 et D2 ne sont mises en oeuvre que dans le cas où il existe des portions de territoire, telles que les autoroutes en France, pour lesquelles les dépanneurs doivent être agréés pour intervenir. Dans le cas où de tels agréments n'existent pas, l'étape D peut ne comporter que les étapes D3. à D5. De même, dans le cadre de l'étape D3 et lorsque lors de la mise en oeuvre de l'étape D1 il est déterminé la nécessité d'une autorisation d'intervention en ce qui concerne la position estimée du véhicule, les dépanneurs agrées pour la zone sont considérés comme les seuls à être apte à intervenir sur le type de véhicule compte tenu de sa position.

Plus spécifiquement, les étapes D3. à D5. peuvent être mise en oeuvre sur la base d'une structure multi-critère pondérée afin d'établir pour chacun des dépanneurs un score d'intervention. Un tel score peut être calculé sur la base d'une équation du type *S*_{*dépaneeur*=Σ(*W*ᵢ×*S*ᵢ)}.
avec Wᵢ un poids du critère i et Si un score normalisé du critère et S_{dépanneur} le score du dépanneur considéré.

Selon cette possibilité les critères Sᵢ peuvent être sélectionnés parmi :
- un score S₁ de disponibilité, le dépanneur présentant un score de 0 en cas d'indisponibilité ou s'il n'est pas joignable et un score de 1 en cas de disponibilité, ce score pouvant être éventuellement pondéré par un score de réactivité,
- un score S₂ de compatibilité technique prenant en compte la disponibilité des équipement requis pour intervenir sur le véhicule, la procession des certifications spécifique au véhicule, et un historique de panne similaire,
- un score S₃ d'accessibilité prenant en compte une distance pondéré entre la position estimée du véhicule et la localisation du dépanneur, les conditions de circulation en temps réel, la météorologie,
- un score S₄ de performance prenant en compte les temps moyens d'intervention sur des pannes du même type, un taux de résolution lors de l'intervention et un taux de satisfaction des usagers dépannés lors de précédentes interventions.

Dans le cadre de cette possibilité, le poids Wᵢ des critères Sᵢ peut être adapté en fonction de la situation du véhicule, des indications de l'usager et de critères extérieurs ainsi par exemple :
- dans le cas d'une situation dangereuse pour le véhicule, notamment en ce qui concerne sa localisation, le poids W₁ relatif au score S₁ de disponibilité peut être augmenté,
- dans la cas d'une météorologie extrême, notamment en cas de cyclone, le poids W₃ relatif au score S₃ d'accessibilité peut être augmenté,
- dans le cas d'une panne complexe ou d'un véhicule requérant des compétences particulière, le poids W₂ relatif au score S₂ de compatibilité peut être augmenté,
- dans le cas où la panne à lieu au moment des heures de pointes ou que la zone de la position estimée du véhicule présente une situation de congestion, le poids W₃ relatif au score S₃ d'accessibilité peut être augmenté.

Selon une possibilité permise par de tels poids Wᵢ de critères et de tels scores Sᵢ, il peut être prévu un ajustement des poids Wᵢ et/ou sur le calcul des scores Sᵢ ceci notamment pour prendre en compte les spécificités locales et offrir une adaptation saisonnière.

Une fois le score dépanneur S_{dépanneur} déterminé pour chacun des dépanneurs susceptibles d'intervenir, le dépanneur sélectionné peut être celui présentant le score dépanneur S_{dépanneur} le plus élevé.

Une fois cette étape mise en oeuvre, dans le cadre de l'étape E. il est envoyé au dépanneur sélectionné une demande d'intervention.

Si celui-ci accepte, l'usager est informé dans le cadre de l'étape F. par un envoi d'une confirmation d'intervention à l'usager par l'intermédiaire de son dispositif de communication, la confirmation intégrant préférentiellement une indication relative au temps d'attente avant l'arrivée d'un intervenant du dépanneur 111, 112, 113, 115 identifié. Dans le cas où le dépanneur informe de sa disponibilité, une fois l'acceptation de la demande de dépannage reçu, il peut être transmis une indisponibilité du dépanneur, ou du moins de l'un de ses intervenants, afin que ce dernier ne soit pas sollicité dans le cas où une autre panne interviendrait alors que l'intervention est encore en cours.

Finalement après résolution de la panne ou retrait du véhicule, dans le cas où, dans le cadre de l'étape C. il a été transmis à une autorité et/un organisme d'information routière, l'information relative à la présence d'un véhicule en panne, il peut être transmis dans le cadre de l'étape H. l'information de la résolution de la panne ou retrait du véhicule. De cette manière, l'autre automobiliste cesse d'être informé sur la présence d'un véhicule qui ne se trouve plus sur le bas-côté.

De même, selon une possibilité de l'invention, le présent procédé peut également fournir un service de facturation et éventuellement de paiement. Ce service de facturation peut être à destination de l'usager lui-même, d'un organisme employeur de l'usager ou encore d'un service d'assurance souscrit par l'usagerou l'organisme employeurde l'usager. Ainsi, la panne suspectée étant identifiée, dans le cas où le dépanneur à préalablement fourni sa tarification, il peut être transmis en même temps que la confirmation d'acceptation ou de la fin d'intervention, un estimatif, ou une facture, relatif à au moins une partie des coûts associés à l'intervention soit à l'usager, l'organisme employeur de l'usager ou ledit service d'assurance. Dans le cas où cette transmission est à destination de l'usager, le présent procédé selon l'invention peut prévoir un paiement d'un acompte, dans le cas d'un estimatif, ou de la facture, dans le cas d'une facture, au moyen de son dispositif dispositifs de communication 31.

On notera, comme déjà précisé pour l'usager, un tel procédé de dépannage d'un véhicule d'un usager peut être mise en oeuvre à partir de dispositifs de communication 31, 32, 33, tels que des mobiles multifonction (ou selon la dénomination anglaise « smartphone), des ardoises (ou tablettes tactiles, telles que des Ipad^{™} ou des tablettes android^{™}) ou des ordinateurs personnels. En effet, conformément à l'invention, l'usager peut, à partir de son dispositif de communication 31 :
- fournir les informations relatives à son véhicule
- faire sa demande de dépannage,
- et suivre son traitement, incluant notamment la réception de la confirmation d'intervention par le dépanneur et un éventuel suivi de l'arrivé de son intervenant sur le lieu de la panne.

En ce qui concerne le dépanneur, celui-ci ou l'un de ses intervenants, peut également utiliser un dispositif de communication 32, 33, pour :
- fournir les informations suivantes : localisation du dépanneur, types de véhicules susceptibles d'être dépannés par le dépanneur et éventuellement les équipements à disposition, des informations relatives au dispositif de communication 32,33 d'au moins un de ses intervenants,
- transmettre une information relative à un changement de disponibilité du dépanneur 111, 112, 113, 115 et/ou de l'un de ces équipements,
- recevoir une demande d'intervention lorsqu'il a été identifié comme dépanneur susceptible d'intervenir, et
- fournir une information de positionnement de l'intervenant du dépanneur.

Ainsi, le procédé selon l'invention peut être mis en oeuvre à partir d'un système de gestion de dépannage d'un véhicule d'un usager. Un tel système de gestion de dépannage comprend au moins un appareil informatique 20, tel qu'un ou plusieurs serveurs informatiques, conformé pour communiquer avec un dispositif de communication 31 de l'usager possédant le véhicule 100 en panne. Conformément à l'invention, l'appareil informatique 20 est configuré pour :
- recevoir une demande de dépannage par l'usager au moyen de son dispositif de communication, la demande de dépannage identifiant le type du véhicule et un type de panne suspectée,
- localiser l'usager notamment au moyen du dispositif de communication, ladite localisation fournissant une position estimée du véhicule de l'usager,
- identifier un dépanneur 111, 112, 113, 115 susceptible d'intervenir pour dépanner le véhicule de l'usager, l'identification étant basée sur au moins l'un des critères suivants :
   - le type de véhicule,
   - le type de panne suspectée,
   - la position du véhicule,
   - éventuelle autorisation d'intervention à l'emplacement du véhicule,
   - la disponibilité du dépanneur 111, 112, 113, 115 et des équipements nécessaires pour intervenir sur le véhicule,
- envoyer une demande d'intervention au dépanneur identifié 112.

Pour cette mise en oeuvre du procédé selon l'invention à partir d'un système de gestion de dépannage, la communication entre l'au moins un appareil informatique 20 et le dispositif de communication 31 de l'usager possédant le véhicule 100 en panne peut se faire au moyen d'une page internet (ou html), d'une application web et/ou une application mobile en tant que telle. La figure 5 fourni une illustration d'un exemple page d'une telle application ou page internet accessible à l'usager dans laquelle l'usager peut suivre la sélection parmi les dépanneurs identifiées 111, 112, 113, 114, 115 de celui 112 présentant le temps de déplacement estimé le plus faible, le dépanneur 115 n'ayant pas été sélectionné puisqu'indiqué non disponible.

Plus spécifiquement, selon cette possibilité et comme montré sur la figure 4, dans le cadre d'un tel système de gestion de dépannage 1, l'au moins un appareil informatique 20 est en outre configuré pour :
- communiquer avec le dispositif de communication de l'usager au moyen d'une première interface logicielle, notamment choisie parmi une application mobile, une application internet et une page internet, ladite première interface logicielle étant dédiée à l'usager,
- communiquer avec le dispositif de communication 32, 33 de chaque dépanneur afin notamment d'envoyer la demande d'intervention au dépanneur identifié 112, ladite communication avec le dispositif de communication de chaque dépanneur étant réalisée au moyen d'une deuxième interface logicielle, notamment choisie parmi une application mobile, une application internet et une page internet, ladite deuxième interface logicielle étant dédiée aux dépanneurs, et
- communiquer avec un dispositif de communication d'administration du système de gestion de dépannage d'un véhicule, ladite communication avec le dispositif de communication d'administration étant réalisée au moyen d'une troisième interface logicielle, notamment choisie parmi une application mobile, une application internet et une page internet, ladite troisième interface logicielle étant dédiée à l'administration du système de gestion de dépannage d'un véhicule.

Selon cette possibilité, la troisième interface peut permettre, à partir ladite communication avec le dispositif de communication d'administration 35, d'administrer au moins l'un parmi :
- des règles utilisées pour identifier du dépanneur susceptible d'intervenir pour dépanner le véhicule de l'usager,
- d'éventuelles zones dans lesquelles une autorisation d'intervention est nécessaire,
- l'émission de rapports d'activité concernant les demandes d'invention et d'interventions ayant eu lieu.

De cette manière, à partir de cette troisième interface et du dispositif de communication d'administration qui y est connecté, il est possible de commander et superviser le système de gestion de dépannage 1 et d'ici vérifier la bonne mise en oeuvre du procédé selon l'invention. On notera en particulier, que cette troisième interface est particulièrement avantageuse dans le cas où les étapes D3. à D5. sont mise en oeuvre sur la base d'une structure multi-critère. En effet, cette troisième interface peut permettre à un administrateur du système :
- d'obtenir une mesure en temps réel des performances du système de gestion, notamment en obtenant les informations relatives au temps d'intervention moyen, aux taux de satisfactions des usagers et le taux d'identification des pannes, et les informations relatives aux interventions en cours, et
- adapter les règles utilisées pour identifier du dépanneur notamment concernant l'adaptation des poids Wᵢ de score et le calcul des scores Sᵢ en eux même.

Si bien entendu la configuration de l'appareil informatique 20 ci-dessus correspond aux étapes A., B., D. et E., en fonction de sa configuration et de la mise en oeuvre du procédé pour laquelle il est configuré, l'appareil informatique 20 peut également être configuré pour mettre en oeuvre l'une quelconque des étapes PA., PB., PC., C., F., G. et H.

Selon une configuration usuelle de l'invention, le dépanneur et/ou ses intervenants utilisant un dispositif de communication 32, 33 pour la mise en oeuvre du présent procédé, l'appareil informatique est également configuré pour communiquer avec le ou les dispositifs de communication des dépanneurs, et/ou de leurs intervenants, susceptible de dépanner le véhicule 100.

On notera également qu'en particulier, l'appareil informatique 20 peut être configuré pour, préalablement à la réception d'une demande de dépannage par l'usager, récupérer des informations relatives à son véhicule, ces informations relatives au véhicule incluant au moins l'un parmi une immatriculation du véhicule, un type véhicule, un constructeur du véhicule, une date de mise en circulation du véhicule et des opérations de maintenance réalisées sur le véhicule. Selon cette même possibilité, l'appareil informatique 20 étant en outre configuré pour, lors de la réception d'une demande de dépannage par l'usager au moyen de son dispositif de communication, l'usager ayant également fourni des informations relatives à la panne affectant son véhicule, soumettre en entrée d'un réseau de neurones les informations relatives au véhicule et les informations relatives à la panne, le réseau de neurones ayant été préalablement entraîné pour fournir en sortie la ou les pannes susceptibles d'être présentées par un véhicule, la ou les pannes obtenues en sortie dudit réseau de neurones constituant le type de panne suspectée.

En outre, l'invention peut également concerner un produit programme d'ordinateur comprenant du code information configuré pour mettre en oeuvre au moins une partie des étapes du procédé de dépannage selon l'invention, incluant notamment les étapes A., B., D. et E., et un support d'enregistrement informatique lisible par un ordinateur stockant ledit produit-programme.

## Revendications

1. Procédé de dépannage d'un véhicule (100) d'un usager, l'usager possédant un dispositif de communication (31), le procédé comprenant les étapes suivantes :
A. demande de dépannage par l'usager au moyen de son dispositif de communication, la demande de dépannage identifiant le type du véhicule et éventuellement un type de panne suspectée,
B. localisation de l'usager notamment au moyen du dispositif de communication, ladite localisation fournissant une position estimée du véhicule de l'usager,
D. identification d'un dépanneur (111, 112, 113, 115) susceptible d'intervenir pour dépanner le véhicule de l'usager, l'identification étant basée sur au moins l'un des critères suivants :
- le type de véhicule,
- le cas échéant, le type de panne suspectée,
- la position estimée du véhicule,
- éventuelle autorisation d'intervention à la position estimée du véhicule,
- la disponibilité du dépanneur (111, 112, 113, 115) et des équipements nécessaires pour intervenir sur le véhicule,
E. Envoi d'une demande d'intervention au dépanneur identifié (112).

2. Procédé de dépannage d'un véhicule selon la revendication 1 comprenant en outre les étapes suivantes :
C. transmission de l'information relative à la présence d'un véhicule en panne et de l'emplacement du véhicule, à une autorité et/un organisme d'information routier,
H. de manière optionnelle, après résolution de la panne ou retrait du véhicule, transmission de l'information de la résolution de la panne du véhicule.

3. Procédé de dépannage d'un véhicule selon la revendication 1 ou 2, dans lequel préalablement à l'étape D. d'identification du dépanneur (111, 112, 113, 115) susceptible d'intervenir, le procédé de dépannage d'un véhicule comprend les étapes préalables suivantes :
PA. Pour chaque dépanneur (111, 112, 113, 115) apte à fournir un dépannage d'un véhicule, fourniture des informations suivantes : localisation du dépanneur, types de véhicules susceptibles d'être dépannés par le dépanneur et éventuellement les équipements à disposition, des informations relatives à un dispositif de communication (32,33) d'un intervenant du dépanneur,
PB. de manière optionnelle, transmission d'une information relative à un changement de disponibilité du dépanneur (111, 112, 113, 115) et/ou de l'un de ces équipements, cette information étant préférentiellement utilisée lors de l'étape D. d'identification du dépanneur.

4. Procédé de dépannage d'un véhicule selon la revendication 3, dans laquelle l'étape D. d'identification du dépanneur (111, 112, 113, 115) comprend les sous-étapes suivantes :
D3.sélection sur un territoire donné autour de la position estimée du véhicule de dépanneurs susceptibles d'intervenir pour le dépannage du véhicule, ces dépanneurs susceptibles d'intervenir pour le dépannage du véhicule étant localités sur le territoire donné et étant préférentiellement sélectionnés comme apte à intervenir sur le type de véhicule et sur le type de panne suspecté, comme comportant l'équipement adapté et, lorsqu'il est mis en oeuvre une étape préalable PB. de transmission de l'information relative à un changement de disponibilité, étant confirmé comme disponible,
D4.détermination pour chacun des dépanneurs sélectionnés d'un temps de déplacement estimé pour intervenir à la position estimée,
D5.identification du dépanneur susceptible d'intervenir pour dépanner le véhicule de l'usager parmi les dépanneurs sélectionnés sur la base des temps de déplacement estimés à la sous étape D4..

5. Procédé de dépannage d'un véhicule selon l'une quelconque des revendication 1 à 4, dans lequel l'étape D. d'identification du dépanneur (111, 112, 113, 115) comprend la sous étape suivante :
D1. vérification si la position estimée du véhicule est associée à une zone dans laquelle une autorisation d'intervention est nécessaire,
D2. dans le cas où une telle autorisation d'intervention est nécessaire pour la position estimée, identification du ou des dépanneurs présentant une telle autorisation comme étant susceptibles d'intervenir pour le dépannage du véhicule,

6. Procédé de dépannage d'un véhicule selon l'une quelconque des revendications 1 à 5, dans lequel préalablement à la demande de dépannage, le procédé peut comprendre l'étape suivante :
PC. fourniture par l'usager des informations relatives à son véhicule, ces informations relatives au véhicule incluant au moins l'un parmi une immatriculation du véhicule, un type véhicule, un constructeur du véhicule, une date de mise en circulation du véhicule et des opérations de maintenance réalisées sur le véhicule ;
Et dans lequel l'étape A. de demande de dépannage par l'usager comprend les sous-étapes suivantes :
A1. fourniture par l'usager des informations relatives à la panne affectant son véhicule,
A2. fourniture des informations relatives au véhicule et des informations relatives à la panne en entrée d'un réseau de neurones préalablement entraîné pour fournir en sortie la ou les pannes susceptibles d'être présentées par un véhicule, la ou les pannes obtenues en sortie dudit réseau de neurones constituant le type de panne suspectée.

7. Procédé de dépannage d'un véhicule selon l'une quelconque des revendications 1 à 6, comprenant en outre l'étape suivante :
F. après réception d'une acceptation d'intervention par le dépanneur (111, 112, 113, 115) identifié, envoi d'une confirmation d'intervention à l'usager par l'intermédiaire de son dispositif de communication, la confirmation intégrant préférentiellement une indication relative au temps d'attente avant l'arrivée d'un intervenant du dépanneur (111, 112, 113, 115) identifié.

8. Procédé de dépannage d'un véhicule selon la revendication 8, comprenant en outre, après l'étape F. d'envoi d'une confirmation d'intervention à l'usager, l'étape suivante :
G. récupération d'une information de positionnement d'un intervenant du dépanneur (111, 112, 113, 115) identifié venant effectuer l'intervention de dépannage, par exemple au moyen d'un dispositif de communication (32, 33) de l'intervenant, et transmission de cette information à l'usager par l'intermédiaire de son dispositif de communication (31).

9. Système de gestion de dépannage d'un véhicule d'un usager, comprenant au moins un appareil informatique, tel qu'un ou plusieurs serveurs informatiques, conformé pour communiquer avec un dispositif de communication (31) d'un usager possédant un véhicule en panne, l'appareil informatique étant configuré pour :
- recevoir une demande de dépannage par l'usager au moyen de son dispositif de communication, la demande de dépannage identifiant le type du véhicule et un type de panne suspectée,
- localiser l'usager notamment au moyen du dispositif de communication, ladite localisation fournissant une position estimée du véhicule de l'usager,
- identifier un dépanneur (111, 112, 113, 115) susceptible d'intervenir pour dépanner le véhicule de l'usager, l'identification étant basée sur au moins l'un des critères suivants :
- le type de véhicule,
- le type de panne suspectée,
- la position estimée du véhicule,
- éventuelle autorisation d'intervention à l'emplacement du véhicule,
- la disponibilité du dépanneur (111, 112, 113, 115) et des équipements nécessaires pour intervenir sur le véhicule,
- envoyer une demande d'intervention au dépanneur identifié (112).

10. Système de gestion de dépannage d'un véhicule selon la revendication 9, dans lequel, l'appareil informatique (20) est configuré pour, préalablement à la réception d'une demande de dépannage par l'usager, récupérer des informations relatives à son véhicule, ces informations relatives au véhicule incluant au moins l'un parmi une immatriculation du véhicule, un type de véhicule, un constructeur du véhicule, une date de mise en circulation du véhicule et des opérations de maintenance réalisées sur le véhicule,
l'appareil informatique (20) étant en outre configuré pour, lors de la réception d'une demande de dépannage par l'usager au moyen de son dispositif de communication, l'usager ayant également fourni des informations relatives à la panne affectant son véhicule, soumettre en entrée d'un réseau de neurones les informations relatives au véhicule et les informations relatives à la panne, le réseau de neurones ayant été préalablement entraîné pour fournir en sortie la ou les pannes susceptibles d'être présentées par un véhicule, la ou les pannes obtenues en sortie dudit réseau de neurones constituant le type de panne suspectée.

11. Système de gestion de dépannage d'un véhicule selon la revendication 9 ou 10, dans lequel l'au moins un appareil informatique est en outre configuré pour :
- communiquer avec le dispositif de communication (31) de l'usager au moyen d'une première interface logicielle, notamment choisie parmi une application mobile, une application internet et une page internet, ladite première interface logicielle étant dédiée à l'usager,
- communiquer avec un dispositif de communication (32, 33) de chaque dépanneur, ou de son intervenant, afin notamment d'envoyer la demande d'intervention au dépanneur identifié (112), ladite communication avec le dispositif de communication (32, 33) de chaque dépanneur, ou de son intervenant, étant réalisée au moyen d'une deuxième interface logicielle, notamment choisie parmi une application mobile, une application internet et une page internet, ladite deuxième interface logicielle étant dédiée aux dépanneurs, et
- de manière avantageuse, communiquer avec un dispositif de communication d'administration (35) du système de gestion de dépannage d'un véhicule, ladite communication avec le dispositif de communication d'administration (35) étant réalisée au moyen d'une troisième interface logicielle, notamment choisie parmi une application mobile, une application internet et une page internet, ladite troisième interface logicielle étant dédiée à l'administration du système de gestion de dépannage d'un véhicule.

12. Système de gestion de dépannage d'un véhicule selon la revendication 11, dans lequel l'au moins un appareil informatique (20) est configuré pour communiquer avec le dispositif de communication d'administration (20) du système de gestion de dépannage d'un véhicule, ladite communication avec le dispositif de communication d'administration (35) étant réalisée au moyen de la troisième interface logicielle,
dans lequel la troisième interface permet, à partir ladite communication avec le dispositif de communication d'administration, d'administrer au moins l'un parmi :
- des règles utilisées pour identifier du dépanneur susceptible d'intervenir pour dépanner le véhicule de l'usager,
- d'éventuelles zones dans lesquelles une autorisation d'intervention est nécessaire, des interventions sur véhicules en cours,
- l'émission de rapports d'activité concernant les demandes d'invention et d'interventions ayant eu lieu.
